(19) Europäisches Patentamt / European Patent Office / Office européen des brevets

(11) **EP 4 148 531 B1**

(12) **EUROPEAN PATENT SPECIFICATION**

(45) Date of publication and mention
of the grant of the patent:
**25.02.2026 Bulletin 2026/09**

(21) Application number: **21828796.9**

(22) Date of filing: **24.05.2021**

(51) International Patent Classification (IPC):
*G06F 1/08* (2006.01)

(52) Cooperative Patent Classification (CPC):
**G06F 1/08**

(86) International application number:
**PCT/CN2021/095563**

(87) International publication number:
**WO 2021/258956 (30.12.2021 Gazette 2021/52)**

(54) **CLOCK CONFIGURATION SYSTEM AND METHOD**

TAKTKONFIGURATIONSSYSTEM UND -VERFAHREN

SYSTÈME ET PROCÉDÉ DE CONFIGURATION D'HORLOGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2020 CN 202010576988**

(43) Date of publication of application:
**15.03.2023 Bulletin 2023/11**

(73) Proprietor: **Sanechips Technology Co., Ltd.
Shenzhen, Guangdong 518055 (CN)**

(72) Inventors:
• **YANG, Jian
Shenzhen, Guangdong 518057 (CN)**
• **YANG, Jing
Shenzhen, Guangdong 518057 (CN)**
• **ZHOU, Peng
Shenzhen, Guangdong 518057 (CN)**

(74) Representative: **Savi, Massimiliano et al
Notarbartolo & Gervasi S.p.A.
Viale Achille Papa, 30
20149 Milano (IT)**

(56) References cited:
CN-A- 107 315 448          CN-A- 109 361 381
CN-A- 109 521 834          CN-U- 205 563 555
US-A1- 2018 191 302

• "Virtex-5 FPGA RocketIO GTP Transceiver", 25 March 2009 (2009-03-25), pages 1 - 333, XP093088003, Retrieved from the Internet <URL:http://121.40.40.33/download/XILINX/ug196.pdf> [retrieved on 20231002]
• MARC DEFOSSEZ: "Virtex-5 FPGA Interface to a JESD204A Compliant ADC", INTERNET CITATION, 22 February 2010 (2010-02-22), pages 1 - 26, XP002675293, Retrieved from the Internet <URL:http://www.xilinx.com/support/documentation/application_notes/xapp876.pdf> [retrieved on 20120404]

**Description**

**TECHNICAL FIELD**

Embodiments of the present application relate to the field of communication, and in particular, to a clock configuration system and method.

**BACKGROUND**

In increasingly complex communication systems, with a rapid increase in the amount of data transmission, various communication protocols support higher and higher rates, and the number of data transmission channels integrated into each communication module is increasing. In a single channel, line rates in transmitting and receiving directions are completely independent. The line rates in respective channels are independent, and sampling frequencies in the transmitting and receiving directions are completely independent. The above features bring the advantages of powerful data processing capability and flexible use. At the same time, due to increasing combinations of AD/DA sampling frequencies and transmission channel line rates, a design scale becomes larger and larger. In the case where a conventional clock design and configuration manner continues to be used, the complexity of the system will be increased, and clock configuration is also increasingly difficult.

Internet publication "Virtex-5 FPGA RocketIO GTP Transceiver" shows how to use the RocketIO™ GTP transceivers in Virtex®-5 FPGAs.

Internet publication "Virtex-5 FPGA Interface to a JESD204A Compliant ADC" describes how to interface the Virtex®-5 LXT, SXT, TXT, and FXT devices featuring GTP/GTX transceivers to an analog-to-digital (ADC) converter compliant to JEDEC Standard No. 204A (JESD204A) *Serial Interface for Data Converters.*

Patent literature CN109521834A discloses a DP signal generating device and a method. The device includes a control unit, a clock adjusting unit and a signal adjusting unit. The control unit is used for calculating the frequency division coefficient and the frequency multiplication coefficient according to the output bandwidth required by the module to be tested and the frequency of the first reference clock. The clock adjusting unit is configured to perform frequency doubling processing on the first reference clock according to the frequency doubling coefficient to obtain a high-frequency clock signal. The signal adjusting unit is used for dividing the high-frequency clock signal according to the frequency dividing coefficient, and converting the received DP parallel data into serial data output according to the frequency dividing clock.

Patent literature (CN107315448A) discloses a design method for a clock management framework of a low-power multi-core SoC. A PLL (phase-locked loop) circuit is integrated in an SoC chip; an input clock is subjected to frequency doubling to obtain a high-frequency clock required in the SoC chip; the clock subjected to the frequency doubling is subjected to frequency division of different multiples through a frequency divider according to application configuration information to obtain working clocks required by all modules in the SoC chip; the selection of a clock source is controlled through an external port CLKMODE, and an external clock source mode or a PLL mode is selected.

Patent literature CN205563555U relates to a signal processing technique field provides an implementation system of self -defined variable bit wide SPI bus agreement based on FPGA, and this system includes clock frequency module, address count module, mode -selection module, control state machine, parallel serial conversion module, chip selection distribution module, data count module.

While the above publications may achieve their intended purposes, there is still a need for a new and improved clock configuration system and method.

**SUMMARY**

In view of the above, according to an embodiment of the present application, a clock configuration system is provided, which includes: a clock generation circuit, and a communication module includes a configuration unit, a clock management unit, and a communication circuit; the clock generation circuit is connected to the clock management unit in the communication module; the clock management unit is connected to the communication circuit; and the communication circuit is connected to the configuration unit; the clock generation circuit is configured to provide a reference clock to the communication module; the configuration unit is configured to configure a line rate and a data bit width for data transmission in the communication circuit, determine a clock frequency division coefficient according to the line rate and the data bit width, and set the clock frequency division coefficient into the clock management unit; and the clock management unit is configured to determine an operating clock frequency according to the reference clock and the clock frequency division coefficient, and provide the operating clock frequency to the communication circuit; where the clock management unit includes a Phase Locked Loop, PLL, circuit, a transmit divider, and a data channel divider; the communication circuit includes a transmit data processing unit, a transmit transport layer unit, a plurality of transmit channels, and a plurality of parallel-serial conversion units; wherein each transmit channel corresponds to a respective one of the parallel-serial conversion units; the PLL circuit is connected to the clock generation circuit, the transmit divider, and the data channel divider; the transmit divider is connected to the transmit data processing unit and the transmit transport layer unit; the data channel divider is connected to each of the plurality of transmit channels, and each transmit channel is connected to a respective one of the parallel-serial conversion units; the configuration unit is configured to configure a line rate and a data bit width for each transmit channel, determine a first frequency division coefficient according to a total line rate and a total data bit width of the transmit channels, and set the first frequency division coefficient into the transmit divider; the configuration unit is further configured to determine a second frequency division coefficient, and set the second frequency division coefficient into the data channel divider; the PLL circuit is configured to transmit the reference clock to the transmit divider and the data channel divider; the transmit divider is configured to determine a first operating clock frequency according to the reference clock and the first frequency division coefficient, and provide the first operating clock frequency to the transmit data processing unit and the transmit transport layer unit; the data channel divider is configured to determine a second operating clock frequency according to the reference clock and the second frequency division coefficient, and provide the second operating clock frequency to each of the plurality of transmit channels; and each of the plurality of parallel-serial conversion units is connected to the clock generation circuit and is configured to receive the reference clock, and generate, according to the reference clock, a third operating clock frequency for each parallel-serial conversion unit; and where determination of the second frequency division coefficient includes: acquiring a maximum value of the ratio of the line rate to the data bit width among the transmit channels; and determining the second frequency division coefficient according to the maximum value and the reference clock.

According to an embodiment of the present application, a clock configuration method is provided, which is performed by the clock configuration system according to an embodiment of the present application. The method includes: receiving a reference clock, and acquiring a configured line rate and a configured data bit width for data transmission; determining a clock frequency division coefficient according to the line rate and the data bit width; determining an operating clock frequency according to the clock frequency division coefficient and the reference clock; and providing the operating clock frequency to the communication module.

## BRIEF DESCRIPTION OF DRAWINGS

FIG. 1 depicts a schematic diagram of a clock configuration system according to an embodiment of the present application;

FIG. 2 depicts a schematic diagram of a clock configuration system according to an embodiment of the present application; and

FIG. 3 depicts a flowchart of a clock configuration method according to an embodiment of the present application.

## DETAILED DESCRIPTION

Objects, technical schemes and advantages of the present application will be clearer from a detailed description of embodiments of the present application in conjunction with the drawings. It is to be noted that if not in collision, the embodiments in the present application and features in the embodiments may be combined with each other.

It is to be understood that specific embodiments described herein are intended only to explain and not to limit the present application.

In subsequent descriptions, a suffix such as "module", "component", or "unit" used for representing an element is used only for describing the present application, and does not have any particular meanings. Therefore, "module", "component" and "unit" are exchangeable.

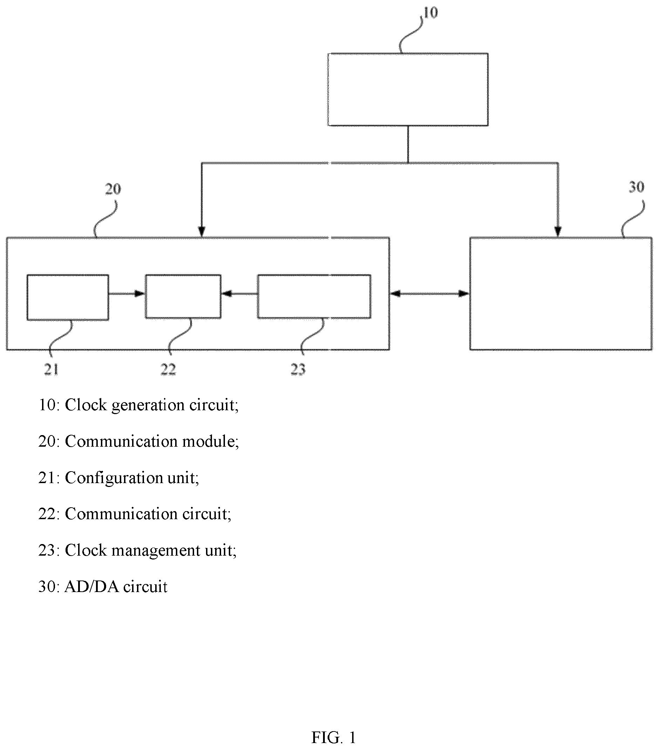

FIG. 1 depicts a schematic diagram of a clock configuration system according to an embodiment of the present application. As shown in FIG. 1, the system includes: a clock generation circuit 10, a communication module 20, and an AD/DA circuit 30. The communication module 20 includes a configuration unit 21, a clock management unit 22, and a communication circuit 23.

The clock generation circuit 10 is connected to the clock management unit 22 in the communication module 20. The clock management unit 22 is connected to the communication circuit 23. The communication circuit 23 is connected to the configuration unit 21.

The clock generation circuit 10 is configured to provide a reference clock to the communication module 20 and the AD/DA circuit 30. The configuration unit 21 is configured to configure a line rate and a data bit width of data transmission in the communication circuit 23, determine a clock frequency division coefficient according to the line rate and the data bit width, and configure the clock frequency division coefficient in the clock management unit 22. The clock management unit 22 is configured to determine an operating clock frequency according to the reference clock and the clock frequency division coefficient, and provide the operating clock frequency to the communication circuit 23.

The configuration unit can be understood as a general command center of the system, and configure, according to different application scenarios, various units in a certain order to schedule the operation of the system. A look-up table may be pre-generated for configurations of various scenarios, and corresponding configuration information in the table is selected for configuration according to different scenarios. For example, it is assumed that, during scenario switching, first configuration information in the table is selected for Scenario 1, and second configuration information in the table is selected when Scenario 2 is switched to.

The clock configuration system in the embodiment may be applied to JESD204B/C protocol different-rate clock configuration.

In an embodiment, the clock management unit includes a Phase Locked Loop (PLL) circuit, a transmit divider, and a data channel divider. The communication circuit includes a transmit data processing unit, a transmit transport layer unit, a plurality of transmit channels, and a plurality of parallel-serial conversion units, where the transmit channels are in one-to-one correspondence to the parallel-serial conversion units. The PLL circuit is connected to the clock generation circuit, the transmit divider, and the data channel divider, respectively. The transmit divider is connected to the transmit data processing unit and the transmit transport layer unit, respectively. The data channel divider is connected to the plurality of transmit channels. Each transmit channel is connected to a corresponding parallel-serial conversion unit. The configuration unit is configured to configure line rates and data bit widths for the transmit channels, determine a first frequency division coefficient according to a total line rate and a total data bit width of the transmit channels, and configure the first frequency division coefficient in the transmit divider. The configuration unit is further configured to determine a second frequency division coefficient, and set the second frequency division coefficient into the data channel divider. The PLL circuit is configured to transmit the reference clock to the transmit divider and the data channel divider. The transmit divider is configured to determine a first operating clock frequency according to the reference clock and the first frequency division coefficient, and provide the first operating clock frequency to the transmit data processing unit and the transmit transport layer unit. The data channel divider is configured to determine a second operating clock frequency according to the reference clock and the second frequency division coefficient, and provide the second operating clock frequency to the plurality of transmit channels. The plurality of parallel-serial conversion units are each connected to the clock generation circuit and configured to receive the reference clock, and generate, according to the reference clock, a third operating clock frequency required by the parallel-serial conversion units.

The PLL circuit is configured to adjust the reference clock and transmit the adjusted reference clock to the transmit divider, the data channel divider, and the receive divider. The process of adjustment may be a process of frequency spreading of the reference clock. The frequency spreading may be understood as increasing the reference clock by an integral multiple. For example, in case that the reference clock is at 150 Hz, the reference clock is at 450 Hz after increasing by 3 times.

The parallel-serial conversion unit is further configured to convert parallel transmit data to serial transmit data. If N parallel-serial conversion units are present, the clock generation circuit provides N reference clocks.

In an embodiment, the first frequency division coefficient may be determined according to the total line rate and the total data bit width of the transmit channels by: acquiring a first ratio of the total line rate to the total data bit width of the transmit channels; and determining the first frequency division coefficient according to the first ratio and the reference clock.

In particular, the first ratio is a first operating clock frequency. Provided that the line rate configured for each transmit channel is R1(i) and the configured data bit width is W1(i), then the determined first operating clock frequency is

$$f1 = \frac{\sum_i R1(i)}{\sum_i W1(i)}$$

. The first frequency division coefficient is determined according to the calculated first clock frequency and the adjusted reference clock, and is configured in the transmit divider, so that the transmit divider generates the first operating clock frequency according to the first frequency division coefficient and the adjusted reference clock. The first frequency division coefficient may be a ratio of the first clock frequency to the adjusted reference clock.

In an embodiment, the system further includes: a plurality of first transmit data conversion units and a plurality of second transmit data conversion units. The first transmit data conversion units and the second transmit data conversion units are in one-to-one correspondence to the transmit channels. Each first transmit data conversion unit is connected between the transmit transport layer unit and a respective one of the transmit channels. Each second transmit data conversion unit is connected between a respective one of the transmit channels and a respective one of the parallel-serial conversion units.

Each first transmit data conversion unit has a write end connected to the transmit divider and configured to receive the first operating clock frequency transmitted by the transmit divider. Each first transmit data conversion units has a read end connected to the data channel divider and configured to receive the second operating clock frequency transmitted by the data channel divider. Each first transmit data conversion unit is configured to convert an operating clock frequency of transmit data from the first operating clock frequency into the second operating clock frequency.

Each second transmit data conversion unit has a write end connected to the data channel divider and configured to receive the second operating clock frequency transmitted by the data channel divider. Each second transmit data conversion unit has a read end connected to a parallel-serial conversion unit and configured to receive the third operating clock frequency transmitted by the parallel-serial conversion unit. Each second transmit data conversion unit is configured to convert a bit width of the transmit data, and/or convert the operating clock frequency of the transmit data from the second operating clock frequency into the third operating clock frequency.

In an embodiment, the transmit channel includes: a transmit link layer unit and a transmit data logic processing unit. The transmit link layer unit is connected between the first transmit data conversion unit and the transmit data logic processing unit. The transmit data logic processing unit is connected between the transmit link layer unit and the second transmit data conversion unit. The data channel divider is configured to provide the second operating clock frequency to the transmit link layer unit and the transmit data logic processing unit.

The transmit link layer unit is configured to encode the transmit data. The transmit data logic processing unit is configured to frame and scramble the encoded transmit data.

The encoding of transmit data may include 8B/10B encoding, 64b/66b encoding or the like. The scrambling process may involve: performing a logical operation (such as XOR operation) on a pseudo-random sequence generated by a pseudo-random code generator, and the transmit data, to change features of the transmit data, so as to change the transmit data into an unpredictable data flow. The framing may be performed in a manner such that a head and a tail are added to the front and the back of a piece of data to form a frame.

In an embodiment, the clock management unit further includes a receive divider. The communication circuit includes a receive data processing unit, a receive transport layer unit, a plurality of receive channels, and a plurality of serial-parallel conversion units. The receive channels are in one-to-one correspondence to the serial-parallel conversion units. The receive divider is connected to the PLL circuit, the receive data processing unit, and the receive transport layer unit. The data channel divider is connected to the plurality of receive channels. A receive channel is connected to a respective one of the serial-parallel conversion units.

The configuration unit is configured to configure line rates and data bit widths of the receive channels, determine a third frequency division coefficient according to a total line rate and a total data bit width of the receive channels, and set the third frequency division coefficient into the receive divider. The PLL circuit is configured to transmit the reference clock to the receive divider.

The receive divider is configured to determine a fourth operating clock frequency according to the reference clock and the third frequency division coefficient, and provide the fourth operating clock frequency to the receive data processing unit and the receive transport layer unit.

The data channel divider is further configured to provide the second operating clock frequency to the plurality of transmit channels. The plurality of serial-parallel conversion units are connected to the clock generation circuit and configured to receive the reference clock, and generate, according to the reference clock, a fifth operating clock frequency required by the serial-parallel conversion units.

The third frequency division coefficient may be determined according to the total line rate and the total data bit width of the receive channels by: acquiring a second ratio of the total line rate to the total data bit width of the receive channels; and determining the third frequency division coefficient according to the second ratio and the reference clock.

The second ratio may be understood as the fourth operating clock frequency. Assuming that the line rate configured for each receive channel is R2(i) and the configured data bit width is W2(i), the determined fourth operating clock frequency is $f4 = \dfrac{\sum_i R2(i)}{\sum_i W2(i)}$. The third frequency division coefficient is determined according to the calculated fourth clock frequency and the adjusted reference clock, and is set into the receive divider, so that the receive divider generates the fourth operating clock frequency according to the third frequency division coefficient and the adjusted reference clock. The third frequency division coefficient may be a ratio of the fourth operating clock frequency to the adjusted reference clock.

In an embodiment, the second frequency division coefficient may be determined by: acquiring a maximum value of the ratios of the line rates to the data bit widths of each of the transmit channels and/or each of the receive channels; and determining the second frequency division coefficient according to the maximum value and the reference clock.

The determined second operating clock frequency is $f2 = \max \dfrac{R(i)}{W(i)}$. The second frequency division coefficient is determined according to the calculated second clock frequency and the adjusted reference clock, and is configured in the data channel divider, so that the data channel divider generates the second operating clock frequency according to the second frequency division coefficient and the adjusted reference clock. The above processing has the advantage of ensuring that the line rates of data in the transmit link layer unit, the transmit data logic processing unit, the receive link layer unit, and receive data logic processing unit are greater than the line rates of all channels. The second frequency division coefficient may be a ratio of the second clock frequency to the adjusted reference clock.

In an embodiment, the system further includes: a plurality of first receive data conversion units and a plurality of second receive data conversion units. The first receive data conversion units and the second receive data conversion units are respectively in one-to-one correspondence to the receive channels. Each first receive data conversion unit is connected between the receive transport layer unit and a respective one of the receive channels. Each second receive data conversion unit is connected between a respective one of the receive channels and a respective one of the parallel-serial conversion units.

Each first receive data conversion unit has a read end connected to the receive divider and configured to receive the fourth operating clock frequency transmitted by the receive divider. Each first receive data conversion unit has a write end connected to the data channel divider and configured to receive the second operating clock frequency transmitted by the data channel divider. Each first receive data conversion unit is configured to convert an operating clock frequency of receive data from the second operating clock frequency into the fourth operating clock frequency.

Each second receive data conversion unit has a read end connected to the data channel divider and configured to receive the second operating clock frequency transmitted by the data channel divider. Each second receive data conversion unit has a write end connected to a respective one of the serial-parallel conversion units and configured to receive the fifth operating clock frequency transmitted by the serial-parallel conversion unit. Each second receive data conversion unit is configured to convert a bit width of the receive data, and/or convert the operating clock frequency of the receive data from the fifth operating clock frequency into the second operating clock frequency.

In an embodiment, the receive channel includes: a receive link layer unit and a receive data logic processing unit. The receive link layer unit is connected between a first receive data conversion unit and a receive data logic processing unit. The receive data logic processing unit is connected between a receive link layer unit and a second receive data conversion unit. The data channel divider is configured to provide the second operating clock frequency to the receive link layer unit and the receive data logic processing unit.

The receive link layer unit is configured to decode the receive data. The receive data logic processing unit is configured to deframe and descramble the encoded receive data.

Descrambling is a reverse process of scrambling, and involves performing the same logical operation on the scrambled receive data by the same pseudo-random code as that of a transmitting end, and restoring data before scrambling. The deframing is a reverse process of framing, and involves identifying the start and end of a frame according to head and end tags of the receive data after a data flow is received.

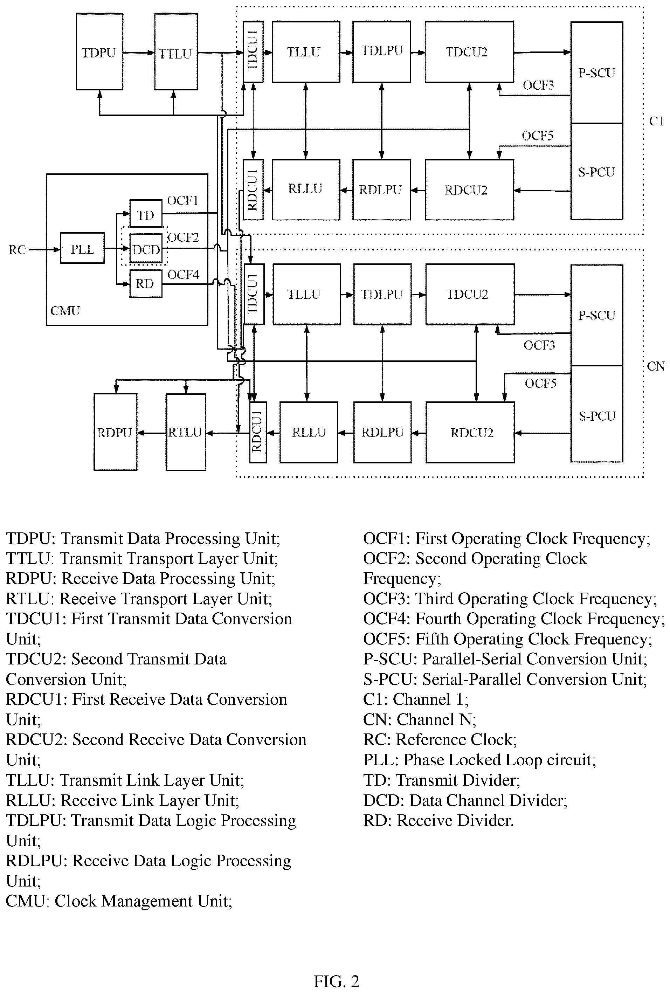

FIG. 2 depicts a schematic diagram of a clock configuration system according to an embodiment of the present application. As a further illustration of the above embodiment, as shown in FIG. 2, the clock management unit 22 includes a PLL, a transmit divider, a data channel divider, and a receive divider. The communication circuit includes a communication circuit responsible for transmit data and a communication circuit responsible for receive data. The communication circuit responsible for transmit data includes: a transmit data processing unit, a transmit transport layer unit, a plurality of transmit channels, and a plurality of parallel-serial conversion units. Each transmit channel includes a transmit link layer unit and a transmit data logic processing unit. The communication circuit responsible for receive data includes: a receive data processing unit, a receive transport layer unit, a plurality of receive channels, and a plurality of serial-parallel conversion units. Each receive channel includes a receive link layer unit and a receive data logic processing unit.

The transmit channels are in one-to-one correspondence to the parallel-serial conversion units. The receive channels are in one-to-one correspondence to the serial-parallel conversion units.

In an embodiment, the transmit divider is configured to provide the first operating clock frequency to the transmit data processing unit and the transmit transport layer unit. The data channel divider is configured to provide the second operating clock frequency to the transmit link layer unit, the transmit data logic processing unit, the receive link layer unit, and the receive data logic processing unit. The receive divider is configured to provide the fourth operating clock frequency to the receive data processing unit and the receive transport layer unit.

In an embodiment, as shown in FIG. 2, the PLL circuit is connected to the clock generation circuit, the transmit divider, and the data channel divider, respectively. The transmit divider is connected to the transmit data processing unit and the transmit transport layer unit. The data channel divider is connected to the plurality of transmit channels. Each transmit channel is connected to a respective one of the parallel-serial conversion units.

In an embodiment, the configuration unit 21 is configured to configure line rates and data bit widths for each of the transmit channels, determine a first frequency division coefficient according to a total line rate and a total data bit width of the transmit channels, and set the first frequency division coefficient into the transmit divider; and the configuration unit is further configured to determine a second frequency division coefficient according to the line rate and data bit width of each of the transmit channels and/or the receive channels, and set the second frequency division coefficient into the data channel divider.

In an embodiment, the transmit divider provides the first operating clock frequency to the transmit data processing unit and the transmit transport layer unit. The data channel divider provides the second operating clock frequency to a plurality of transmit channels, that is, to the transmit link layer units and the transmit data logic processing units.

In an embodiment, each of the plurality of parallel-serial conversion units is connected to the clock generation circuit and configured to receive the reference clock, and generate, according to the reference clock, a third operating clock frequency required by the parallel-serial conversion units.

In an embodiment, as shown in FIG. 2, the system further includes: a plurality of first transmit data conversion units and a plurality of second transmit data conversion units. The first transmit data conversion units and the second transmit data conversion units are both in one-to-one correspondence to the transmit channels. Each first transmit data conversion unit is connected between the transmit transport layer unit and a respective one of the transmit channels. Each second transmit data conversion unit is connected between a respective one of the transmit channels and a respective one of the parallel-serial conversion units.

Each first transmit data conversion unit is configured to convert a clock domain of the transmit data. Each second transmit data conversion unit is configured to convert a bit width and/or a clock domain of the transmit data. Converting the clock domain may be understood as converting an operating clock frequency of the transmit data.

Each first transmit data conversion unit has a write end connected to the transmit divider and configured to receive the first operating clock frequency transmitted by the transmit divider. Each first transmit data conversion unit has a read end connected to the data channel divider and configured to receive the second operating clock frequency transmitted by the data channel divider. Each first transmit data conversion unit is configured to convert an operating clock frequency of transmit data from the first operating clock frequency into the second operating clock frequency.

The write end of each first transmit data conversion unit can be understood as the end of the first transmit data conversion unit to which data is inputted, and the read end can be understood as the end of the first transmit data conversion unit from which data is outputted.

Each second transmit data conversion unit has a write end connected to the data channel divider and configured to receive the second operating clock frequency transmitted by the data channel divider. Each second transmit data conversion unit has a read end connected to a parallel-serial conversion unit and configured to receive the third operating clock frequency transmitted by the parallel-serial conversion unit. Each second transmit data conversion unis is configured to convert a bit width of the transmit data, and/or convert the operating clock frequency of the transmit data from the second operating clock frequency into the third operating clock frequency.

The write end of each second transmit data conversion unit can be understood as the end of the second transmit data conversion unit to which data is inputted, and the read end can be understood as the end of the second transmit data conversion unit from which data is outputted.

Each of the first transmit data conversion units and the second transmit data conversion units is implemented as a pingpong-RAM. The pingRAM and the pongRAM may each store one frame of data. In each first transmit data conversion unit, data is written at a line rate of R1(i) at the write end, and data is read at a line rate of f2*W1(i) at the read end. In each second transmit data conversion unit, data is written at a line rate of f2*W1(i) at the write end, and data is read at a line rate of R1(i) at the read end.

In an embodiment, as shown in FIG. 2, the transmit channel includes: a transmit link layer unit and a transmit data logic processing unit. Each transmit link layer unit is connected between a first transmit data conversion unit and a transmit data logic processing unit. Each transmit data logic processing unit is connected between a transmit link layer unit and a second transmit data conversion unit. The data channel divider is configured to provide the second operating clock frequency to the transmit link layer units and the transmit data logic processing units.

Each transmit link layer unit is configured to encode the transmit data. Each transmit data logic processing unit is configured to frame and scramble the encoded transmit data. In this embodiment, the encoding of the transmit link layer unit and the framing and scrambling of the transmit data logic processing unit are all configured by the configuration unit.

In an embodiment, as shown in FIG. 2, the clock management unit further includes a receive divider. The communication circuit includes a receive data processing unit, a receive transport layer unit, a plurality of receive channels, and a plurality of serial-parallel conversion units. The receive channels are in one-to-one correspondence to the serial-parallel conversion units.

In an embodiment, as shown in FIG. 2, the receive divider is connected to the PLL circuit, the receive data processing unit, and the receive transport layer unit. The data channel divider is connected to the plurality of receive channels. Each receive channel is connected to a respective one of the serial-parallel conversion units.

The configuration unit 21 is configured to configure line rates and data bit widths of the receive channels, determine a third frequency division coefficient according to a total line rate and a total data bit width of the receive channels, and set the third frequency division coefficient into the receive divider.

The PLL circuit is configured to transmit the adjusted reference clock to the receive divider. The receive divider is configured to provide the fourth operating clock frequency to the receive data processing units and the receive transport layer units.

In this embodiment, the data channel divider is further configured to provide the second operating clock frequency to the plurality of transmit channels.

In an embodiment, each of the plurality of serial-parallel conversion unit is connected to the clock generation circuit and configured to receive the reference clock, and generate, according to the reference clock, a fifth operating clock frequency required by the serial-parallel conversion units.

Each serial-parallel conversion unit is further configured to convert serial receive data into parallel receive data. If N serial-parallel conversion units present, it is necessary for the clock generation circuit provide N reference clocks.

In an embodiment, the system further includes: a plurality of first receive data conversion units and a plurality of second receive data conversion units. The first receive data conversion units and the second receive data conversion units are both in one-to-one correspondence to the receive channels.

Each first receive data conversion unit is connected between the receive transport layer unit and a respective one of the receive channels. Each second receive data conversion unit is connected between a respective one of the receive channels and a respective one of the parallel-serial conversion units.

In this embodiment, each first receive data conversion unit is configured to convert a clock domain of the receive data. Each second receive data conversion unit is configured to convert a bit width and/or a clock domain of the received data. Converting the clock domain may be understood as converting an operating clock frequency of the received data.

In an embodiment, each first receive data conversion unit has a read end connected to the receive divider and configured to receive the fourth operating clock frequency transmitted by the receive divider. Each first receive data conversion unit has a write end connected to the data channel divider and configured to receive the second operating clock frequency transmitted by the data channel divider. Each first receive data conversion unit is configured to convert an operating clock frequency of the received data from the second operating clock frequency into the fourth operating clock frequency.

The write end of each first receive data conversion unit can be understood as the end of the first receive data conversion unit to which data is inputted, and the read end can be understood as the end of the first receive data conversion unit from which data is outputted.

In an embodiment, each second receive data conversion unit has a read end connected to the data channel divider and configured to receive the second operating clock frequency transmitted by the data channel divider. Each second receive data conversion unit has a write end connected to a serial-parallel conversion unit and configured to receive the fifth operating clock frequency transmitted by the serial-parallel conversion unit. Each second receive data conversion unit is configured to convert a bit width of the received data, and/or convert the operating clock frequency of the received data from the fifth operating clock frequency into the second operating clock frequency.

The write end of each second receive data conversion unit can be understood as the end of the second receive data conversion unit to which data is inputted, and the read end can be understood as the end of the second receive data conversion unit from which data is outputted.

Each of the first receive data conversion units and the second receive data conversion units is implemented as a pingpong-RAM. The pingRAM and the pongRAM may each store one frame of data. In each first transmit data conversion unit, data is written at a line rate of $f2*W2(i)$ at the write end, and data is read at a line rate of $R2(i)$ at the read end. In each second transmit data conversion unit, data is written at a line rate of $R2(i)$ at the write end, and data is read at a line rate of $f2*W2(i)$ at the read end.

In an embodiment, each receive channel includes: a receive link layer unit and a receive data logic processing unit. Each receive link layer unit is connected between a first receive data conversion unit and a receive data logic processing unit. Each receive data logic processing unit is connected between a receive link layer unit and a second receive data conversion unit. The data channel divider is configured to provide the second operating clock frequency to the receive link layer units and the receive data logic processing units.

Each receive link layer unit is configured to decode the received data. Each receive data logic processing unit is configured to deframe and descramble the encoded received data. In this embodiment, the decoding of the receive link layer unit and the deframing and descrambling of the receive data logic processing unit are all configured by the configuration unit.

In this embodiment, the transmit link layer units and the transmit data logic processing units in the plurality of transmit channels and the receive link layer units and the receive data logic processing units in the plurality of receive channels share a single second operating clock frequency, so that the number of clocks will not be increased due to an increase in the number of the transmit channels and the receive channels, simplifying the process of clock configuration.

In the technical scheme of this embodiment, a clock generation circuit and a communication module are included. The communication module includes a configuration unit, a clock management unit, and a communication circuit. The clock generation circuit is configured to provide a reference clock to the communication module. The configuration unit is configured to configure a line rate and a data bit width of data transmission in the communication circuit, determine a clock frequency division coefficient according to the line rate and the data bit width, and set the clock frequency division coefficient into the clock management unit. The clock management unit is configured to determine an operating clock frequency according to the reference clock and the clock frequency division coefficient, and provide the operating clock frequency to the communication circuit. The operating clock frequency is determined according to the configured line rate and data bit width, so that the complexity of clock configuration in the communication module can be reduced.

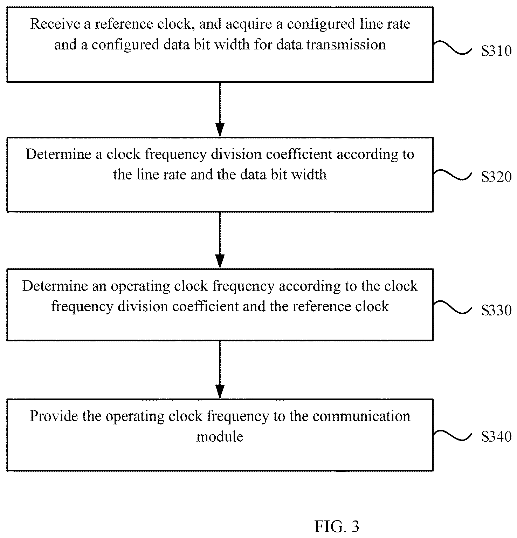

FIG. 3 depicts a flowchart of a clock configuration method according to an embodiment of the present application. As shown in FIG. 3, the method includes S310 to S340.

At S310, a reference clock is received, and a configured line rate and a configured data bit width for data transmission are acquired.

At S320, a clock frequency division coefficient is determined according to the line rate and the data bit width.

At S330, an operating clock frequency is determined according to the clock frequency division coefficient and the reference clock.

At S340, the operating clock frequency is provided to the communication module.

Please refer to the description in the above embodiments for the procedure of clock configuration, which is not repeated here.

In this embodiment, a reference clock is received, and a configured line rate and a configured data bit width for data transmission are acquired; a clock frequency division coefficient is determined according to the line rate and the data bit width; an operating clock frequency is determined according to the clock frequency division coefficient and the reference clock; and the operating clock frequency is provided to the communication module. The operating clock frequency is determined according to the configured line rate and the configured data bit width, so that the complexity of clock configuration in the communication module can be reduced.

Clock configuration system and method are provided in the embodiments of the present application, the system includes a clock generation circuit and a communication module. The communication module includes a configuration unit, a clock management unit, and a communication circuit. The clock generation circuit is configured to provide a reference clock to the communication module. The configuration unit is configured to configure a line rate and a data bit width of data transmission in the communication circuit, determine a clock frequency division coefficient according to the line rate and the data bit width, and set the clock frequency division coefficient into the clock management unit. The clock management unit is configured to determine an operating clock frequency according to the reference clock and the clock frequency division coefficient, and provide the operating clock frequency to the communication circuit. The operating clock frequency is determined according to the configured line rate and data bit width. The plurality of transmit channels and the plurality of receive channels in the communication circuit share one operating clock frequency, so that the number of clocks will not be increased due to an increase in the number of the transmit channels and the receive channels, thus simplifying the process of clock configuration is simplified, and reducing the complexity of clock configuration in the communication module.

Some embodiments of the present application are described above and which are not intended to limit the protection scope of the present application.

Embodiments of the present application may be implemented as computer program instructions executed by a data processor of a mobile apparatus, for example, in a processor entity, may be implemented as hardware, or may be implemented as a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A detailed description of example embodiments of the present application has been provided above through demonstrative and non-restrictive examples. However, in consideration of the drawings and claims, various modifications and alternations to the above embodiments are obvious to those skilled in the art, without departing from the scope of the present application. Accordingly, the proper scope of the present application will be defined by the claims.

## Claims

1. A clock configuration system, comprising: a clock generation circuit (10), and a communication module (20) comprising a configuration unit (21), a clock management unit (23), and a communication circuit (22); wherein,

   the clock generation circuit (10) is connected to the clock management unit (23) in the communication module (20); the clock management unit (23) is connected to the communication circuit (22), and the communication circuit (22) is connected to the configuration unit (21);
   the clock generation circuit (10) is configured to provide a reference clock to the communication module (20); the configuration unit (21) is configured to configure a line rate and a data bit width for data transmission in the communication circuit (22), determine a clock frequency division coefficient according to the line rate and the data bit width, and set the clock frequency division coefficient into the clock management unit (23); and
   the clock management unit (23) is configured to determine an operating clock frequency according to the reference clock and the clock frequency division coefficient, and provide the operating clock frequency to the communication circuit (22);
   wherein,

the clock management unit (23) comprises a Phase Locked Loop, PLL, circuit, a transmit divider, and a data channel divider; the communication circuit (22) comprises a transmit data processing unit, a transmit transport layer unit, a plurality of transmit channels, and a plurality of parallel-serial conversion units; wherein each transmit channel corresponds to a respective one of the parallel-serial conversion units; the PLL circuit is connected to the clock generation circuit (10), the transmit divider, and the data channel divider; the transmit divider is connected to the transmit data processing unit and the transmit transport layer unit; the data channel divider is connected to each of the plurality of transmit channels, and each transmit channel is connected to a respective one of the parallel-serial conversion units; the configuration unit (21) is configured to configure a line rate and a data bit width for each transmit channel, determine a first frequency division coefficient according to a total line rate and a total data bit width of the transmit channels, and set the first frequency division coefficient into the transmit divider; the configuration unit (21) is further configured to determine a second frequency division coefficient, and set the second frequency division coefficient into the data channel divider; the PLL circuit is configured to transmit the reference clock to the transmit divider and the data channel divider; the transmit divider is configured to determine a first operating clock frequency according to the reference clock and the first frequency division coefficient, and provide the first operating clock frequency to the transmit data processing unit and the transmit transport layer unit; the data channel divider is configured to determine a second operating clock frequency according to the reference clock and the second frequency division coefficient, and provide the second operating clock frequency to each of the plurality of transmit channels; and each of the plurality of parallel-serial conversion units is connected to the clock generation circuit (10) and is configured to receive the reference clock, and generate, according to the reference clock, a third operating clock frequency for each parallel-serial conversion unit; and wherein determination of the second frequency division coefficient comprises:

acquiring a maximum value of the ratio of the line rate to the data bit width among the transmit channels; and determining the second frequency division coefficient according to the maximum value and the reference clock.

2. The system of claim 1, wherein determination of the first frequency division coefficient according to the total line rate and the total data bit width of the transmit channels comprises:

acquiring a first ratio of the total line rate to the total data bit width of the transmit channels; and determining the first frequency division coefficient according to the first ratio and the reference clock.

3. The system of claim 1, further comprising: a plurality of first transmit data conversion units and a plurality of second transmit data conversion units, and each first transmit data conversion unit and each second transmit data conversion unit corresponding to a respective one of the transmit channels; wherein,

each first transmit data conversion unit is connected between the transmit transport layer unit and a respective one of the transmit channels, and each second transmit data conversion unit is connected between a respective one of the transmit channels and a respective one of the parallel-serial conversion units; each first transmit data conversion unit has, a write end connected to the transmit divider and configured to receive the first operating clock frequency transmitted by the transmit divider, and a read end connected to the data channel divider and configured to receive the second operating clock frequency transmitted by the data channel divider; and each first transmit data conversion unit is configured to convert an operating clock frequency of transmit data from the first operating clock frequency into the second operating clock frequency; and each second transmit data conversion unit has a write end connected to the data channel divider and configured to receive the second operating clock frequency transmitted by the data channel divider, and a read end connected to a respective one of the parallel-serial conversion units and configured to receive the third operating clock frequency transmitted by the respective one of the parallel-serial conversion units, and each second transmit data conversion unit is configured to convert a bit width of the transmit data, and/or convert an operating clock frequency of the transmit data from the second operating clock frequency into the third operating clock frequency.

4. The system of claim 3, wherein each transmit channel comprises a transmit link layer unit and a transmit data logic processing unit;

the transmit link layer unit is connected between a respective one of the first transmit data conversion units and a respective one of the transmit data logic processing units; and the transmit data logic processing unit is connected between the transmit link layer unit and a respective one of the second transmit data conversion units; and

the data channel divider is configured to provide the second operating clock frequency to the transmit link layer unit and the transmit data logic processing unit of each transmit channel.

5. The system of claim 4, wherein the transmit link layer unit is configured to encode the transmit data, and the transmit data logic processing unit is configured to frame and scramble the encoded transmit data.

6. The system of claim 1, wherein the clock management unit (23) further comprises a receive divider; the communication circuit (22) comprises a receive data processing unit, a receive transport layer unit, a plurality of receive channels, and a plurality of serial-parallel conversion units; wherein each receive channel corresponds to a respective one of the serial-parallel conversion units;

the receive divider is connected to the PLL circuit, the receive data processing unit, and the receive transport layer unit; the data channel divider is connected to each of the plurality of receive channels; and each receive channel is connected to a respective one of the serial-parallel conversion units;

the configuration unit (21) is configured to configure a line rate and a data bit width for each receive channel, determine a third frequency division coefficient according to a total line rate and a total data bit width of the receive channels, and set the third frequency division coefficient into the receive divider;

the PLL circuit is configured to transmit the reference clock to the receive divider;

the receive divider is configured to determine a fourth operating clock frequency according to the reference clock and the third frequency division coefficient, and provide the fourth operating clock frequency to the receive data processing unit and the receive transport layer unit;

the data channel divider is further configured to provide the second operating clock frequency to each of the plurality of transmit channels; and each of the plurality of serial-parallel conversion units is connected to the clock generation circuit (10) and is configured to receive the reference clock, and generate, according to the reference clock, a fifth operating clock frequency for each serial-parallel conversion unit.

7. The system of claim 6, wherein determination of the third frequency division coefficient according to the total line rate and the total data bit width of the receive channels comprises:

acquiring a second ratio of the total line rate to the total data bit width of the receive channels; and

determining the third frequency division coefficient according to the second ratio and the reference clock.

8. The system of claim 6, wherein determination of the second frequency division coefficient comprises:

acquiring a maximum value of the ratio of the line rate to the data bit width among the transmit channels and/or among the receive channels; and

determining the second frequency division coefficient according to the maximum value and the reference clock.

9. The system of claim 6, further comprising: a plurality of first receive data conversion units and a plurality of second receive data conversion units; and each first receive data conversion unit and each second receive data conversion unit corresponding to a respective one of the receive channels; wherein,

each first receive data conversion unit is connected between the receive transport layer unit and a respective one of the receive channels, and each second receive data conversion unit is connected between a respective one of the receive channels and a respective one of the parallel-serial conversion units;

each first receive data conversion unit has, a read end connected to the receive divider and configured to receive the fourth operating clock frequency transmitted by the receive divider, and a write end connected to the data channel divider and configured to receive the second operating clock frequency transmitted by the data channel divider; and each first receive data conversion unit is configured to convert an operating clock frequency of receive data from the second operating clock frequency into the fourth operating clock frequency; and

each second receive data conversion unit has, a read end connected to the data channel divider and configured to receive the second operating clock frequency transmitted by the data channel divider, and a write end connected to a respective one of the serial-parallel conversion units and configured to receive the fifth operating clock frequency transmitted by the respective one of the serial-parallel conversion units; and each second receive data conversion unit is configured to convert a bit width of the receive data, and/or convert an operating clock frequency of the receive data from the fifth operating clock frequency into the second operating clock frequency.

10. The system of claim 9, wherein each receive channel comprises a receive link layer unit and a receive data logic processing unit;

the receive link layer unit is connected between a respective one of the first receive data conversion units and the receive data logic processing unit, and the receive data logic processing unit is connected between the receive link layer unit and a respective one of the second receive data conversion units; and
the data channel divider is configured to provide the second operating clock frequency to the receive link layer unit and the receive data logic processing unit of each receive channel.

11. The system of claim 10, wherein the receive link layer unit is configured to decode the receive data; and the receive data logic processing unit is configured to deframe and descramble the encoded receive data.

12. A clock generation method, performed by the system of any one of claims 1 to 11, comprising:

receiving (S310) a reference clock, and acquiring a configured line rate and a configured data bit width for data transmission;
determining (S320) a clock frequency division coefficient according to the line rate and the data bit width;
determining (S330) an operating clock frequency according to the clock frequency division coefficient and the reference clock; and
providing (S340) the operating clock frequency to the communication module (20).

**Patentansprüche**

1. Taktkonfigurationssystem, umfassend: eine Takterzeugungsschaltung (10) und ein Kommunikationsmodul (20), das eine Konfigurationseinheit (21), eine Taktverwaltungseinheit (23) und eine Kommunikationsschaltung (22) umfasst; wobei

die Takterzeugungsschaltung (10) mit der Taktverwaltungseinheit (23) im Kommunikationsmodul (20) verbunden ist; die Taktverwaltungseinheit (23) mit der Kommunikationsschaltung (22) verbunden ist und die Kommunikationsschaltung (22) mit der Konfigurationseinheit (21) verbunden ist; die Takterzeugungsschaltung (10) dazu konfiguriert ist, dem Kommunikationsmodul (20) einen Referenztakt bereitzustellen; die Konfigurationseinheit (21) dazu konfiguriert ist, eine Leitungsrate und eine Datenbitbreite für die Datenübertragung in der Kommunikationsschaltung (22) zu konfigurieren, einen Taktfrequenzteilungskoeffizienten anhand der Leitungsrate und der Datenbitbreite zu bestimmen und den Taktfrequenzteilungskoeffizienten in der Taktverwaltungseinheit (23) einzustellen; und
die Taktverwaltungseinheit (23) dazu konfiguriert ist, eine Betriebstaktfrequenz anhand des Referenztakts und des Taktfrequenzteilungskoeffizienten zu bestimmen und die Betriebstaktfrequenz an die Kommunikationsschaltung (22) bereitzustellen;
wobei
die Taktverwaltungseinheit (23) eine Phasenregelschleifen- (PLL, Phase Locked Loop) Schaltung, einen Sendeteiler und einen Datenkanalteiler umfasst; die Kommunikationsschaltung (22) eine Sendedatenverarbeitungseinheit, eine Sendetransportschichteinheit, eine Vielzahl von Sendekanälen und eine Vielzahl von Parallel-Seriell-Konvertierungseinheiten umfasst; wobei jeder Sendekanal einer jeweiligen der Parallel-Seriell-Konvertierungseinheiten entspricht;
die PLL-Schaltung mit der Takterzeugungsschaltung (10), dem Sendeteiler und dem Datenkanalteiler verbunden ist; der Sendeteiler mit der Sendedatenverarbeitungseinheit und der Sendetransportschichteinheit verbunden ist; der Datenkanalteiler mit jedem der Vielzahl von Sendekanälen verbunden ist, und jeder Sendekanal mit einer jeweiligen der Parallel-Seriell-Konvertierungseinheiten verbunden ist; die Konfigurationseinheit (21) dazu konfiguriert ist, für jeden Sendekanal eine Leitungsrate und eine Datenbitbreite zu konfigurieren, einen ersten Frequenzteilungskoeffizienten anhand einer Gesamtleitungsrate und einer Gesamtdatenbitbreite der Sendekanäle zu bestimmen und den ersten Frequenzteilungskoeffizienten im Sendeteiler einzustellen; die Konfigurationseinheit (21) ferner dazu konfiguriert ist, einen zweiten Frequenzteilungskoeffizienten zu bestimmen und den zweiten Frequenzteilungskoeffizienten in dem Datenkanalteiler einzustellen;
die PLL-Schaltung dazu konfiguriert ist, den Referenztakt an den Sendeteiler und den Datenkanalteiler zu senden;
der Sendeteiler dazu konfiguriert ist, eine erste Betriebstaktfrequenz anhand des Referenztakts und des ersten Frequenzteilungskoeffizienten zu bestimmen und die erste Betriebs-

taktfrequenz an die Sendedatenverarbeitungs-einheit und die Sendetransportschichteinheit bereitzustellen;

der Datenkanalteiler dazu konfiguriert ist, eine zweite Betriebstaktfrequenz anhand des Referenztakts und des zweiten Frequenzteilungskoeffizienten zu bestimmen und die zweite Betriebstaktfrequenz an jeden der Vielzahl von Sendekanälen bereitzustellen; und

jede der Vielzahl von Parallel-Seriell-Konvertierungseinheiten mit der Takterzeugungsschaltung (10) verbunden ist und dazu konfiguriert ist, den Referenztakt zu empfangen und anhand des Referenztakts eine dritte Betriebstaktfrequenz für jede Parallel-Seriell-Konvertierungseinheit zu erzeugen; und

wobei die Bestimmung des zweiten Frequenzteilungskoeffizienten umfasst:

Ermitteln eines Maximalwerts des Verhältnisses von Leitungsrate zu Datenbitbreite zwischen den Sendekanälen; und Bestimmen des zweiten Frequenzteilungskoeffizienten anhand des Maximalwerts und des Referenztakts.

2. System nach Anspruch 1, wobei die Bestimmung des ersten Frequenzteilungskoeffizienten anhand der Gesamtleitungsrate und der Gesamtdatenbitbreite der Sendekanäle umfasst:

Ermitteln eines ersten Verhältnisses von Gesamtleitungsrate zu Gesamtdatenbitbreite der Sendekanäle; und Bestimmen des ersten Frequenzteilungskoeffizienten anhand des ersten Verhältnisses und des Referenztakts.

3. System nach Anspruch 1, ferner umfassend: eine Vielzahl erster Sendedatenkonvertierungseinheiten und eine Vielzahl zweiter Sendedatenkonvertierungseinheiten, wobei jede erste Sendedatenkonvertierungseinheit und jede zweite Sendedatenkonvertierungseinheit einem jeweiligen der Sendekanäle entspricht; wobei

jede erste Sendedatenkonvertierungseinheit zwischen der Sendetransportschichteinheit und einem jeweiligen der Sendekanäle verbunden ist und jede zweite Sendedatenkonvertierungseinheit zwischen einem jeweiligen der Sendekanäle und einer jeweiligen der Parallel-Seriell-Konvertierungseinheiten verbunden ist;

jede erste Sendedatenkonvertierungseinheit ein Schreibende, das mit dem Sendeteiler verbunden ist und dazu konfiguriert ist, die von dem Sendeteiler gesendete erste Betriebstaktfrequenz zu empfangen, und ein Leseende aufweist, das mit dem Datenkanalteiler verbunden ist und dazu konfiguriert ist, die von dem Datenkanalteiler gesendete zweite Betriebstaktfrequenz zu empfangen; und jede erste Sendedatenkonvertierungseinheit dazu konfiguriert ist, eine Betriebstaktfrequenz der Sendedaten von der ersten Betriebstaktfrequenz in die zweite Betriebstaktfrequenz umzuwandeln; und

jede zweite Sendedatenkonvertierungseinheit ein Schreibende, das mit dem Datenkanalteiler verbunden ist und dazu konfiguriert ist, die von dem Datenkanalteiler gesendete zweite Betriebstaktfrequenz zu empfangen, und ein Leseende aufweist, das mit einer jeweiligen der Parallel-Seriell-Konvertierungseinheiten verbunden ist und dazu konfiguriert ist, die von der jeweiligen Parallel-Seriell-Konvertierungseinheit gesendete dritte Betriebstaktfrequenz zu empfangen, und jede zweite Sendedatenkonvertierungseinheit dazu konfiguriert ist, eine Bitbreite der Sendedaten umzuwandeln und/oder eine Betriebstaktfrequenz der Sendedaten von der zweiten Betriebstaktfrequenz in die dritte Betriebstaktfrequenz umzuwandeln.

4. System nach Anspruch 3, wobei jeder Sendekanal eine Sendeverbindungsschichteinheit und eine Sendedatenlogikverarbeitungseinheit umfasst;

die Sendeverbindungsschichteinheit zwischen einer jeweiligen der ersten Sendedatenkonvertierungseinheiten und einer jeweiligen der Sendedatenlogikverarbeitungseinheiten verbunden ist; und die Sendedatenlogikverarbeitungseinheit zwischen der Sendeverbindungsschichteinheit und einer jeweiligen der zweiten Sendedatenkonvertierungseinheiten verbunden ist; und

der Datenkanalteiler dazu konfiguriert ist, die zweite Betriebstaktfrequenz an die Sendeverbindungsschichteinheit und die Sendedatenlogikverarbeitungseinheit jedes Sendekanals bereitzustellen.

5. System nach Anspruch 4, wobei die Sendeverbindungsschichteinheit dazu konfiguriert ist, die Sendedaten zu codieren, und die Sendedatenlogikverarbeitungseinheit dazu konfiguriert ist, die codierten Sendedaten in Frames zu packen und sie zu verschlüsseln.

6. System nach Anspruch 1, wobei die Taktverwaltungseinheit (23) ferner einen Empfangsteiler umfasst; die Kommunikationsschaltung (22) eine Empfangsdatenverarbeitungseinheit, eine Empfangstransportschichteinheit, eine Vielzahl von Empfangskanälen und eine Vielzahl von Seriell-Parallel-Konvertierungseinheiten umfasst; wobei jeder Empfangskanal einer jeweiligen der Seriell-Parallel-Konvertierungseinheiten entspricht;

der Empfangsteiler mit der PLL-Schaltung, der Empfangsdatenverarbeitungseinheit und der Empfangstransportschichteinheit verbunden ist; der Datenkanalteiler mit jedem der Vielzahl von Empfangskanälen verbunden ist; und jeder Empfangskanal mit einer jeweiligen der Seriell-Parallel-Konvertierungseinheiten verbunden ist;

die Konfigurationseinheit (21) dazu konfiguriert ist, für jeden Empfangskanal eine Leitungsrate und eine Datenbitbreite zu konfigurieren, einen dritten Frequenzteilungskoeffizienten anhand einer Gesamtleitungsrate und einer Gesamtdatenbitbreite der Empfangskanäle zu bestimmen und den dritten Frequenzteilungskoeffizienten im Empfangsteiler einzustellen;

die PLL-Schaltung dazu konfiguriert ist, den Referenztakt an den Empfangsteiler zu senden; der Empfangsteiler dazu konfiguriert ist, eine vierte Betriebstaktfrequenz anhand des Referenztakts und des dritten Frequenzteilungskoeffizienten zu bestimmen und die vierte Betriebstaktfrequenz an die Empfangsdatenverarbeitungseinheit und die Empfangstransportschichteinheit bereitzustellen;

der Datenkanalteiler ferner dazu konfiguriert ist, die zweite Betriebstaktfrequenz an jeden der Vielzahl von Sendekanälen bereitzustellen; und jede der Vielzahl von Seriell-Parallel-Konvertierungseinheiten mit der Takterzeugungsschaltung (10) verbunden ist und dazu konfiguriert ist, den Referenztakt zu empfangen und anhand des Referenztakts eine fünfte Betriebstaktfrequenz für jede Seriell-Parallel-Konvertierungseinheit zu erzeugen.

7. System nach Anspruch 6, wobei die Bestimmung des dritten Frequenzteilungskoeffizienten anhand der Gesamtleitungsrate und der Gesamtdatenbitbreite der Empfangskanäle umfasst:

Ermitteln eines zweiten Verhältnisses von Gesamtleitungsrate zu Gesamtdatenbitbreite der Empfangskanäle; und
Bestimmen des dritten Frequenzteilungskoeffizienten anhand des zweiten Verhältnisses und des Referenztakts.

8. System nach Anspruch 6, wobei die Bestimmung des zweiten Frequenzteilungskoeffizienten umfasst:

Ermitteln eines Maximalwerts des Verhältnisses von Leitungsrate zu Datenbitbreite zwischen den Sendekanälen und/oder zwischen den Empfangskanälen; und
Bestimmen des zweiten Frequenzteilungskoeffizienten anhand des Maximalwerts und des Referenztakts.

9. System nach Anspruch 6, ferner umfassend: eine Vielzahl erster Empfangsdatenkonvertierungseinheiten und eine Vielzahl zweiter Empfangsdatenkonvertierungseinheiten; und wobei jede erste Empfangsdatenkonvertierungseinheit und jede zweite Empfangsdatenkonvertierungseinheit einem jeweiligen der Empfangskanäle entspricht; wobei

jede erste Empfangsdatenkonvertierungseinheit zwischen der Empfangstransportschichteinheit und einem jeweiligen der Empfangskanäle verbunden ist und jede zweite Empfangsdatenkonvertierungseinheit zwischen einem jeweiligen der Empfangskanäle und einer jeweiligen der Parallel-Seriell-Konvertierungseinheiten verbunden ist;

jede erste Empfangsdatenkonvertierungseinheit ein Leseende, das mit dem Empfangsteiler verbunden ist und dazu konfiguriert ist, die von dem Empfangsteiler gesendete vierte Betriebstaktfrequenz zu empfangen, und ein Schreibende aufweist, das mit dem Datenkanalteiler verbunden ist und dazu konfiguriert ist, die von dem Datenkanalteiler gesendete zweite Betriebstaktfrequenz zu empfangen; und jede erste Empfangsdatenkonvertierungseinheit dazu konfiguriert ist, eine Betriebstaktfrequenz der Empfangsdaten von der zweiten Betriebstaktfrequenz in die vierte Betriebstaktfrequenz umzuwandeln; und

jede zweite Empfangsdatenkonvertierungseinheit ein Leseende, das mit dem Datenkanalteiler verbunden ist und dazu konfiguriert ist, die von dem Datenkanalteiler gesendete zweite Betriebstaktfrequenz zu empfangen, und ein Schreibende aufweist, das mit einer jeweiligen der Seriell-Parallel-Konvertierungseinheiten verbunden ist und dazu konfiguriert ist, die von der jeweiligen Seriell-Parallel-Konvertierungseinheiten gesendete fünfte Betriebstaktfrequenz zu empfangen, und jede zweite Empfangsdatenkonvertierungseinheit dazu konfiguriert ist, eine Bitbreite der Empfangsdaten umzuwandeln und/oder eine Betriebstaktfrequenz der Empfangsdaten von der fünften Betriebstaktfrequenz in die zweite Betriebstaktfrequenz umzuwandeln.

10. System nach Anspruch 9, wobei jeder Empfangskanal eine Empfangsverbindungsschichteinheit und eine Empfangsdatenlogikverarbeitungseinheit umfasst;

die Empfangsverbindungsschichteinheit zwischen einer jeweiligen der ersten Empfangsdatenkonvertierungseinheiten und der Empfangsdatenlogikverarbeitungseinheiten verbunden ist, und die Empfangsdatenlogikverarbeitungseinheit zwischen der Empfangsverbindungsschichteinheit und einer jeweiligen der zweiten Empfangsdatenkonvertierungseinheiten verbunden ist; und

der Datenkanalteiler dazu konfiguriert ist, die zweite Betriebstaktfrequenz an die Empfangsverbindungsschichteinheit und die Empfangsdatenlogikverarbeitungseinheit jedes Empfangskanals bereitzustellen.

11. System nach Anspruch 10, wobei die Empfangsverbindungsschichteinheit dazu konfiguriert ist, die Empfangsdaten zu decodieren; und die Empfangsdatenlogikverarbeitungseinheit dazu konfiguriert ist, die codierten Empfangsdaten aus den Frames zu entpacken und sie zu entschlüsseln.

12. Takterzeugungsverfahren, das von dem System nach einem der Ansprüche 1 bis 11 durchgeführt wird, umfassend:

Empfangen (S310) eines Referenztakts und Ermitteln einer konfigurierten Leitungsrate und einer konfigurierten Datenbitbreite für die Datenübertragung;
Bestimmen (S320) eines Taktfrequenzteilungskoeffizienten anhand der Leitungsrate und der Datenbitbreite;
Bestimmen (S330) einer Betriebstaktfrequenz anhand des Taktfrequenzteilungskoeffizienten und des Referenztakts; und
Bereitstellen (S340) der Betriebstaktfrequenz an das Kommunikationsmodul (20).

**Revendications**

1. Système de configuration d'horloge, comprenant :
un circuit de génération d'horloge (10), et un module de communication (20) comprenant une unité de configuration (21), une unité de gestion d'horloge (23), et un circuit de communication (22) ; dans lequel,

le circuit de génération d'horloge (10) est relié à l'unité de gestion d'horloge (23) dans le module de communication (20) ; l'unité de gestion d'horloge (23) est reliée au circuit de communication (22), et le circuit de communication (22) est relié à l'unité de configuration (21) ;
le circuit de génération d'horloge (10) est configuré pour fournir une horloge de référence au module de communication (20) ; l'unité de configuration (21) est configurée pour configurer un débit de ligne et une largeur de bit de données pour la transmission de données dans le circuit de communication (22), déterminer un coefficient de division de fréquence d'horloge en fonction du débit de ligne et la largeur de bit de données, et définir le coefficient de division de fréquence d'horloge dans l'unité de gestion d'horloge (23) ; et
l'unité de gestion d'horloge (23) est configurée pour déterminer une fréquence d'horloge de fonctionnement en fonction de l'horloge de référence et le coefficient de division de fréquence d'horloge, et fournir la fréquence d'horloge de fonctionnement au circuit de communication (22) ;
dans lequel,
l'unité de gestion d'horloge (23) comprend un circuit à boucle à verrouillage de phase (en Anglais « Phase Locked Loop » pour PLL), un diviseur de transmission et un diviseur de canal de données ; le circuit de communication (22) comprend une unité de traitement de données de transmission, une unité de couche de transport de transmission, une pluralité de canaux de transmission et une pluralité d'unités de conversion parallèle-série ; dans lequel chaque canal de transmission correspond à l'une respective des unités de conversion parallèle-série ;
le circuit PLL est relié au circuit de génération d'horloge (10), au diviseur de transmission et au diviseur de canal de données ; le diviseur de transmission est relié à l'unité de traitement de données de transmission et à l'unité de couche de transport de transmission ; le diviseur de canal de données est relié à chacun de la pluralité de canaux de transmission, et chaque canal de transmission est relié à l'une respective des unités de conversion parallèle-série ;
l'unité de configuration (21) est configurée pour configurer un débit de ligne et une largeur de bit de données pour chaque canal de transmission, déterminer un premier coefficient de division de fréquence selon un débit de ligne total et une largeur de bit de données totale des canaux de transmission, et définir le premier coefficient de division de fréquence dans le diviseur de transmission ; l'unité de configuration (21) est en outre configurée pour déterminer un deuxième coefficient de division de fréquence, et définir le deuxième coefficient de division de fréquence dans le diviseur de canal de données ;
le circuit PLL est configuré pour transmettre l'horloge de référence au diviseur de transmission et au diviseur de canal de données ;
le diviseur de transmission est configuré pour déterminer une première fréquence d'horloge de fonctionnement en fonction de l'horloge de référence et le premier coefficient de division de fréquence, et fournir la première fréquence d'horloge de fonctionnement à l'unité de traitement de données de transmission et à l'unité de couche de transport de transmission ;

le diviseur de canal de données est configuré pour déterminer une deuxième fréquence d'horloge de fonctionnement en fonction de l'horloge de référence et le deuxième coefficient de division de fréquence, et fournir la deuxième fréquence d'horloge de fonctionnement à chacun de la pluralité de canaux de transmission ; et chacune de la pluralité d'unités de conversion parallèle-série est reliée au circuit de génération d'horloge (10) et elle est configurée pour recevoir l'horloge de référence, et générer, en fonction de l'horloge de référence, une troisième fréquence d'horloge de fonctionnement pour chaque unité de conversion parallèle-série ; et dans lequel la détermination du deuxième coefficient de division de fréquence comprend :

acquérir une valeur maximale du rapport du débit de ligne à la largeur de bit de données parmi les canaux de transmission ; et déterminer le deuxième coefficient de division de fréquence en fonction de la valeur maximale et de l'horloge de référence.

2. Système selon la revendication 1, dans lequel la détermination du premier coefficient de division de fréquence en fonction du débit total de la ligne et de la largeur de bit de données totale des canaux de transmission comprend :

acquérir un premier rapport entre le débit total de la ligne et la largeur de bit de données totale des canaux de transmission ; et déterminer le premier coefficient de division de fréquence en fonction du premier rapport et de l'horloge de référence.

3. Système selon la revendication 1, comprenant en outre : une pluralité de premières unités de conversion de données de transmission et une pluralité de deuxièmes unités de conversion de données de transmission, et chaque première unité de conversion de données de transmission et chaque deuxième unité de conversion de données de transmission correspondant à l'un respectif des canaux de transmission ; dans lequel,

chaque première unité de conversion de données de transmission est reliée entre l'unité de couche de transport de transmission et l'un respectif des canaux de transmission, et chaque deuxième unité de conversion de données de transmission est reliée entre l'un respectif des canaux de transmission et l'une respective des unités de conversion parallèle-série ;

chaque première unité de conversion de données de transmission possède une extrémité d'écriture reliée au diviseur de transmission et configurée pour recevoir la première fréquence d'horloge de fonctionnement transmise par le diviseur de transmission, et une extrémité de lecture reliée au diviseur de canal de données et configurée pour recevoir la deuxième fréquence d'horloge de fonctionnement transmise par le diviseur de canal de données ; et chaque première unité de conversion de données de transmission est configurée pour convertir une fréquence d'horloge de fonctionnement de données de transmission de la première fréquence d'horloge de fonctionnement en la deuxième fréquence d'horloge de fonctionnement ; et

chaque deuxième unité de conversion de données de transmission possède une extrémité d'écriture reliée au diviseur de canal de données et configurée pour recevoir la deuxième fréquence d'horloge de fonctionnement transmise par le diviseur de canal de données, et une extrémité de lecture reliée à l'une respective des unités de conversion parallèle-série et configurée pour recevoir la troisième fréquence d'horloge de fonctionnement transmise par l'une respective des unités de conversion parallèle-série, et chaque deuxième unité de conversion de données de transmission est configurée pour convertir une largeur de bit des données de transmission, et/ou convertir une fréquence d'horloge de fonctionnement des données de transmission de la deuxième fréquence d'horloge de fonctionnement en la troisième fréquence d'horloge de fonctionnement.

4. Système selon la revendication 3, dans lequel chaque canal de transmission comprend une unité de couche de liaison de transmission et une unité de traitement logique de données de transmission ;

l'unité de couche de liaison de transmission est reliée entre l'une respective des premières unités de conversion de données de transmission et l'une respective des unités de traitement logique de données de transmission ; et l'unité de traitement logique de données de transmission est reliée entre l'unité de couche de liaison de transmission et l'une respective des deuxièmes unités de conversion de données de transmission ; et le diviseur de canal de données est configuré pour fournir la deuxième fréquence d'horloge de fonctionnement à l'unité de couche de liaison de transmission et à l'unité de traitement logique de données de transmission de chaque canal de transmission.

5. Système selon la revendication 4, dans lequel l'unité de couche de liaison de transmission est configurée pour coder les données de transmission, et l'unité de traitement logique de données de transmission est configurée pour tramer et brouiller les données de transmission codées.

6. Système selon la revendication 1, dans lequel l'unité de gestion d'horloge (23) comprend en outre un diviseur de réception ; le circuit de communication (22) comprend une unité de traitement de données de réception, une unité de couche de transport de réception, une pluralité de canaux de réception et une pluralité d'unités de conversion série-parallèle ; dans lequel chaque canal de réception correspond à l'une respective des unités de conversion série-parallèle ;

le diviseur de réception est relié au circuit PLL, à l'unité de traitement de données de réception et à l'unité de couche de transport de réception ; le diviseur de canal de données est relié à chacun de la pluralité de canaux de réception ; et chaque canal de réception est relié à l'une respective des unités de conversion série-parallèle ;

l'unité de configuration (21) est configurée pour configurer un débit de ligne et une largeur de bit de données pour chaque canal de réception, déterminer un troisième coefficient de division de fréquence selon un débit de ligne total et une largeur de bit de données totale des canaux de réception, et définir le troisième coefficient de division de fréquence dans le diviseur de réception ;

le circuit PLL est configuré pour transmettre l'horloge de référence au diviseur de réception ;

le diviseur de réception est configuré pour déterminer une quatrième fréquence d'horloge de fonctionnement en fonction de l'horloge de référence et du troisième coefficient de division de fréquence, et fournir la quatrième fréquence d'horloge de fonctionnement à l'unité de traitement de données de réception et à l'unité de couche de transport de réception ;

le diviseur de canal de données est en outre configuré pour fournir la deuxième fréquence d'horloge de fonctionnement à chacun de la pluralité de canaux de transmission ; et

chacune de la pluralité d'unités de conversion série-parallèle est reliée au circuit de génération d'horloge (10) et elle est configurée pour recevoir l'horloge de référence, et générer, en fonction de l'horloge de référence, une cinquième fréquence d'horloge de fonctionnement pour chaque unité de conversion série-parallèle.

7. Système selon la revendication 6, dans lequel la détermination du troisième coefficient de division de fréquence en fonction du débit de ligne total et de la largeur de bit de données totale des canaux de réception comprend :

acquérir un deuxième rapport entre le débit total de la ligne et la largeur de bit de données totale des canaux de réception ; et

déterminer le troisième coefficient de division de fréquence en fonction du deuxième rapport et de l'horloge de référence.

8. Système selon la revendication 6, dans lequel la détermination du deuxième coefficient de division de fréquence comprend :

acquérir une valeur maximale du rapport du débit de ligne à la largeur de bit de données parmi les canaux de transmission et/ou parmi les canaux de réception ; et

déterminer le deuxième coefficient de division de fréquence en fonction de la valeur maximale et de l'horloge de référence.

9. Système selon la revendication 6, comprenant en outre : une pluralité de premières unités de conversion de données de réception et une pluralité de deuxièmes unités de conversion de données de réception ; et chaque première unité de conversion de données de réception et chaque deuxième unité de conversion de données de réception correspondant à l'un respectif des canaux de réception ; dans lequel,

chaque première unité de conversion de données de réception est reliée entre l'unité de couche de transport de réception et l'un respectif des canaux de réception, et chaque deuxième unité de conversion de données de réception est reliée entre l'un respectif des canaux de réception et l'une respective des unités de conversion parallèle-série ;

chaque première unité de conversion de données de réception possède une extrémité de lecture reliée au diviseur de réception et configurée pour recevoir la quatrième fréquence d'horloge de fonctionnement transmise par le diviseur de réception, et une extrémité d'écriture reliée au diviseur de canal de données et configurée pour recevoir la deuxième fréquence d'horloge de fonctionnement transmise par le diviseur de canal de données ; et chaque première unité de conversion de données de réception est configurée pour convertir une fréquence d'horloge de fonctionnement des données de réception de la deuxième fréquence d'horloge de fonctionnement en la quatrième fréquence d'horloge de fonctionnement ; et

chaque deuxième unité de conversion de données de réception possède une extrémité de lecture reliée au diviseur de canal de données et configurée pour recevoir la deuxième fréquence d'horloge de fonctionnement transmise par le diviseur de canal de données, et une extrémité d'écriture reliée à l'une respective des unités de conversion série-parallèle et configurée pour recevoir la cinquième fréquence d'horloge de fonctionnement transmise par l'une respective des unités de conversion série-parallèle ; et chaque deuxième unité de conversion de données de réception est configurée pour convertir une largeur de bit des données de réception, et/ou convertir une fréquence d'horloge de fonctionnement des données de réception de la cinquième fréquence d'horloge de fonctionnement en la deuxième fréquence d'horloge de fonctionnement.

10. Système selon la revendication 9, dans lequel chaque canal de réception comprend une unité de couche de liaison de réception et une unité de traitement logique de données de réception ;

l'unité de couche de liaison de réception est reliée entre l'une respective des premières unités de conversion de données de réception et l'unité de traitement logique de données de réception, et l'unité de traitement logique de données de réception est reliée entre l'unité de couche de liaison de réception et l'une respective des deuxièmes unités de conversion de données de réception ; et

le diviseur de canal de données est configuré pour fournir la deuxième fréquence d'horloge de fonctionnement à l'unité de couche de liaison de réception et à l'unité de traitement logique de données de réception de chaque canal de réception.

11. Système selon la revendication 10, dans lequel l'unité de couche de liaison de réception est configurée pour décoder les données de réception ; et l'unité de traitement logique de données de réception est configurée pour dé-tramer et désembrouiller les données de réception codées.

12. Procédé de génération d'horloge, mis en œuvre par le système selon l'une quelconque des revendications 1 à 11, comprenant :

recevoir (S310) une horloge de référence, et acquérir un débit de ligne configuré et une largeur de bit de données configurée pour la transmission de données ;

déterminer (S320) un coefficient de division de fréquence d'horloge en fonction du débit de ligne et de la largeur de bit de données ;

déterminer (S330) une fréquence d'horloge de fonctionnement en fonction du coefficient de division de fréquence d'horloge et de l'horloge de référence ; et

fournir (S340) la fréquence d'horloge de fonctionnement au module de communication (20).

10: Clock generation circuit;

20: Communication module;

21: Configuration unit;

22: Communication circuit;

23: Clock management unit;

30: AD/DA circuit

FIG. 1

TDPU: Transmit Data Processing Unit;
TTLU: Transmit Transport Layer Unit;
RDPU: Receive Data Processing Unit;
RTLU: Receive Transport Layer Unit;
TDCU1: First Transmit Data Conversion Unit;
TDCU2: Second Transmit Data Conversion Unit;
RDCU1: First Receive Data Conversion Unit;
RDCU2: Second Receive Data Conversion Unit;
TLLU: Transmit Link Layer Unit;
RLLU: Receive Link Layer Unit;
TDLPU: Transmit Data Logic Processing Unit;
RDLPU: Receive Data Logic Processing Unit;
CMU: Clock Management Unit;

OCF1: First Operating Clock Frequency;
OCF2: Second Operating Clock Frequency;
OCF3: Third Operating Clock Frequency;
OCF4: Fourth Operating Clock Frequency;
OCF5: Fifth Operating Clock Frequency;
P-SCU: Parallel-Serial Conversion Unit;
S-PCU: Serial-Parallel Conversion Unit;
C1: Channel 1;
CN: Channel N;
RC: Reference Clock;
PLL: Phase Locked Loop circuit;
TD: Transmit Divider;
DCD: Data Channel Divider;
RD: Receive Divider.

FIG. 2

Receive a reference clock, and acquire a configured line rate and a configured data bit width for data transmission  ⟿ S310

Determine a clock frequency division coefficient according to the line rate and the data bit width  ⟿ S320

Determine an operating clock frequency according to the clock frequency division coefficient and the reference clock  ⟿ S330

Provide the operating clock frequency to the communication module  ⟿ S340

FIG. 3

**REFERENCES CITED IN THE DESCRIPTION**

**Patent documents cited in the description**

- CN 109521834 A
- CN 107315448 A

- CN 205563555 U